# EUROPEAN PATENT APPLICATION

(11) **EP 1 178 420 A2**
(43) Date of publication of application: **06.02.2002**
(21) Application number: 01118004.9
(22) Date of filing: 25.07.2001
(51) Int. Cl.: G06F 17/60

(54) **Online trading system**

(30) Priority: 01.08.2000 JP 2000233266
(71) Applicant: TSUBASA SYSTEM CO. LTD., Tokyo (JP)
(72) Inventor: Wakabayashi, Akira, c/o Tsubasa System Co., Ltd., Tokyo (JP)
(74) Representative: Lindner, Michael, Dipl.-Ing.

(57) **Abstract**

An online trading system for extensively inviting purchasers by showing an article to public online, and concluding a deal fast by putting up the article to an auction after showing it for a predetermined period is provided. The online trading system of the present invention receives and stores submission for sale of an article and information of the article and selects an auction at which the article is to be auctioned. On the other hand, the on-line trading system shows the information of the article to public via a communicating unit (2), receives an application for purchase of the article and, if there is no application for purchase within a predetermined period or until a predetermined date and time, puts up the article to the auction selected in advance. According to the present invention, a deal can be concluded fast by showing an article to public online to extensively invite purchasers and putting up the article to an auction after a predetermined period (Fig. 1)

## Description

### BACKGROUND OF THE INVENTION

### 1. Field of the Invention

The present invention relates to an online trading system for extensively inviting purchasers by showing an article to public online, and concluding a deal fast by putting up an article to an auction after showing the article to public for a predetermined period.

### 2. Description of the Related Art

In a conventional auction for used automobiles (used cars) and the like, it is a common practice for a participant at the auction (a seller) to bring a used car to a predetermined auction site by transportation means such as a land transportation, and to put up the used car for auction there. For example, in the Japanese Patent Application Laid-open No. Hei 11-328271, an auction system is proposed in which purchasers can participate in an auction without actually visiting an auction site by providing the purchasers with information on an object (a used car) via communication lines by a terminal installed in a remote location, and receiving bid submission also via the communication lines.

On the other hand, an online trade is also known in which a used car is shown to public online, and a purchaser confirms the condition and a sales price of the used car that is made open to public and like other information online to order the car.

According to the auction system described in the Japanese Patent Application Laid-open No. Hei 11-328271, purchasers can participate in an auction from a remote location. However, since the auction is held on a real time basis, the purchasers may not be able to participate in the auction if the schedule of the auction does not suit them.

In addition, in a case of an online trade for showing an article to public online, although purchasers can participate whenever it suits while the article is exhibited, if the period of exhibition is too long, circulation of articles (cars) will stagnate.

Particularly, if the seller is a company, since costs for storing and keeping automobiles that are high-priced and large articles are not negligible, it is desired that a successful bid be made in a short time.

In addition, even in a case of an auction for trades between individuals, if it takes long time until a successful bid is made, a value of an article may decline the next compulsory safety check of the car comes nearer that much or a car model is changed. Therefore, a successful bid is desirably made in a short time.

### SUMMARY OF THE INVENTION

The present invention has been made in view of the above, and an object of the present invention is therefore to provide an online trading system that is capable of extensively inviting purchasers by showing an article to public online, and concluding a deal fast by putting up the article to an auction after showing the article for a predetermined period.

The online trading system according to the present invention adopts a configuration described in the following items (1) through (9).
(1) An online trading system characterized by comprising:
   sale receiving means for receiving submission for sale of an article;
   information inputting means for inputting information of the article;
   information storing means for storing the information of the article;
   auction selecting means for selecting an auction at which the article is to be auctioned;
   information showing means for showing the information of the article to public via communicating means;
   purchase receiving means for receiving an application for purchase of the article; and
   auction instruction information outputting means for instructing a seller to put up the article to the auction selected by the auction selecting means if no purchase application is received within a predetermined period or until a predetermined date and time.

   This configuration enables a deal to be concluded fast by extensively inviting purchasers through showing an article to public via the communicating means and allowing them to make an access whenever it suits them and, if there is no purchaser during a predetermined period, putting up the article to an auction.
(2) An online trading system characterized by comprising:
   sale receiving means for receiving submission for sale of an article;
   information inputting means for inputting information of the article;
   information storing means for storing the information of the article;
   information showing means for showing information of the article to public via communicating means;
   purchase receiving means for receiving an application for purchase of the article; and
   auction selecting means for selecting an auction at which the article is to be auctioned if no purchase application is received within a predetermined period or until a predetermined date and time.

   Although this is a simple configuration, as in the above-mentioned (1), it enables a deal to be concluded fast while extensively inviting purchasers.
(3) An online trading system characterized by comprising:
   sale receiving means for receiving submission for sale of an article;
   information inputting means for inputting information of the article;
   information storing means for storing the information of the article;
   auction selecting means for selecting an auction at which the article is to be auctioned;
   information showing means for showing the information of the article to public via communicating means;
   prior bid receiving means for receiving a bid for the article via the communicating means;
   bid submission receiving means for receiving bid submission to the article at the auction; and
   successful bid determining means for determining a successful bid based on the information received by the prior bid receiving means and the information received by the bid submission receiving means.

   This configuration enables a deal to be concluded fast and at a reasonable price by extensively inviting purchasers by prior bid via the communicating means in which purchasers are allowed to bid whenever it suits them, and by holding an auction after the lapse of a predetermined period.
(4) An online trading system according to the above (3),
   characterized in that the successful bid determining means compares the bid submission of the highest price received by the prior bid receiving means with the bid submission of the highest price received by the bid submission receiving means and determines that the article is sold at a higher price of the two submissions.
   The configuration enables a deal to be concluded fast and at a reasonable price as in the above (3).
(5) An online trading system according to the above (3) or (4), further comprising:
   unit price storing means for storing a unit price of bidding up, characterized in that, if the article is to be sold to a bid submission received by the prior bid receiving means, the successful bid determining means determines a successful bid price by adding the unit price to the highest price of the bid submission received by the bid submission receiving means.

   This configuration enables a bidder to trade at a reasonable price as in the case of participating in an actual auction even if the bidder has made a successful bid by presenting an excessively high bid price at the time of a prior bid.
(6) An online trading system according to the above (3), (4) or (5), further comprising:
   unit price storing means for storing a unit price of bidding up; and
   starting price storing means for storing a starting price of the auction, characterized in that if there is no bid submission at the auction but a bid submission is received via the communicating means, the successful bid determining means determines a successful bid price by adding the unit price to the starting price.

   This configuration enables a bidder to trade at a reasonable price as in the case of participating in an actual auction even if the bidder has made a successful bid by presenting an excessively high bid price at the prior bid.
(7) An online trading system according to any one of the above (1) through (6), characterized in that the information showing means shows the information of the article to public for a predetermined number of days and hours before the date of the auction at which the article is to be auctioned.
   This configuration increases a business opportunity by showing the information of the article to public for the predetermined period and allowing an access whenever it suits a purchaser.
(8) An online trading system according to any one of the above (1) through (6), characterized in that the information showing means shows the information of the article to public on a predetermined day weeks before the date of the auction at which the article is to be auctioned.
   This configuration increases a business opportunity by showing the information of the article to public for the predetermined period and allowing an access whenever it suits a purchaser. In addition, an appropriate period can be set easily by uniquely defining the date for showing the information based on the date of the auction.
   (9) An online trading system according to any one of the above (1) through (8), characterized in that the article is a used car, and the information to be shown by the information showing means includes at least one of a manufacturer, a model, a car name, a grade, a shape, a use, an exterior color, a color No., an interior color, a body number, a displacement volume, the next compulsory safety check date, a mileage, fuel, a shift, equipment, the quickest possible delivery date, a selling point, a photo, and a safety check certificate.

This configuration enables a deal to be concluded fast by putting up a used car to an auction while increasing a business opportunity by extensively inviting purchasers in used car trading that tends to be largely affected by purchaser's personal preferences. Therefore, this configuration makes it possible to control costs for storing and keeping a used car that is a large and high-priced article.

Other and further objects of this invention will become obvious upon an understanding of the illustrative embodiments about to be described or will be indicated in the appended claims, and various advantages not referred to herein will occur to one silled in the art upon employment of the invention in practice.

### BRIEF DESCRIPTION OF THE DRAWINGS

In the accompanying drawings:
Fig. 1 is a schematic diagram illustrating a first embodiment of the present invention;
Fig. 2 shows a display example of article information and the like;
Fig. 3 is a schematic diagram illustrating a second embodiment of the present invention; and
Fig. 4 shows a display example of article information and the like.

### DETAILED DESCRIPTION OF THE PREFERRED EMBODIMENTS

### <First Embodiment>

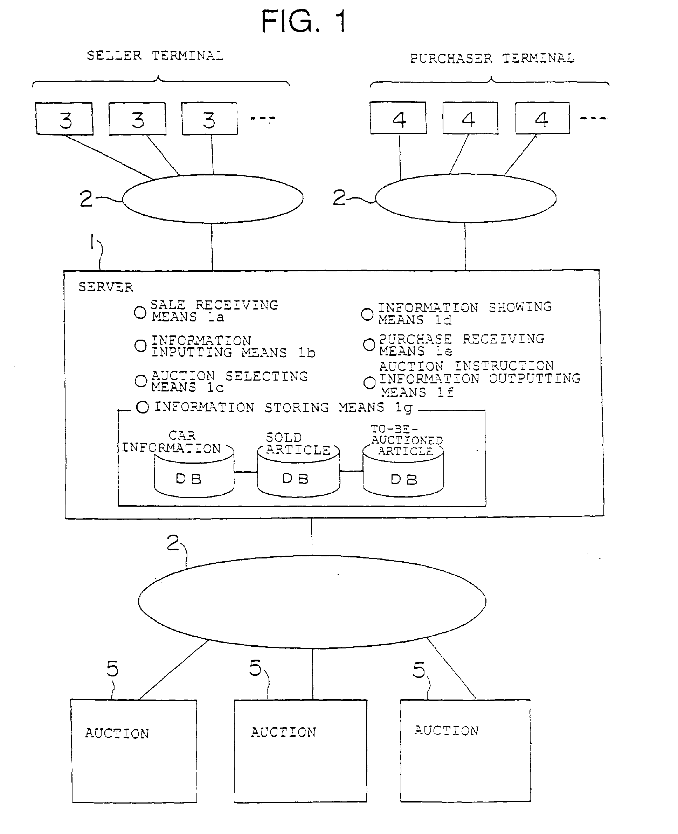

Fig. 1 shows a configuration of an online trading system of used cars which is an embodiment of the present invention.

Reference symbol 1 denotes a server provided with the system, reference symbol 2 denotes communicating means such as the public switched telephone network connected to the server 1, reference symbol 3 denotes a terminal of a seller who makes submission for sale to the system, reference symbol 4 denotes a terminal of a purchaser who applies for purchase to the system, and reference symbol 5 denotes auction sites where auctions are held on a real time basis.

The server 1 is provided with: sale receiving means 1a for receiving submission for sale of an article (a used car) from the seller terminal 3; information inputting means 1b for inputting information of the article (car information); auction selecting means 1c for selecting an auction at which the used car is to be auctioned among auctions to be held in the auction sites 5 ; information showing means 1d for showing the car information to public via the communicating means 2; purchase receiving means 1e for receiving an application for purchase of the used car; auction instruction information outputting means 1f for instructing a seller to put up the used car to the auction selected by the auction selecting means 1c if no application for purchase is received within a predetermined period or until a predetermined date and time; information storing means 1g for storing the car information inputted by the information inputting means 1b; and the like.

Although this system is desirably of closed membership in which sellers and purchasers are registered in advance as members, if authentication is possible by inputting an address, a name, a credit card number and the like, general public may be allowed to participate in the system.

### <Submission for selling or buying an article>

The seller accesses the server 1 from the seller terminal 3 via the public switched telephone network 2, inputs a membership number or the like for authentication, and makes submission for sale of an article to the sale receiving means 1a. In making submission for sale, the seller inputs information (car information) via the information inputting means 1b. As the car information, a manufacturer, a model, a car name, a grade, a shape (distinction among coup, sedan, wagon and the like), a use, an exterior color, a color No., an interior color, a body number, a displacement volume, the next compulsory safety check, a mileage, fuel, a shift (a form of shift, such as automatic, floor shift and column shift), equipment, the quickest possible delivery date, a selling price at the time of showing to public, a starting price (minimum opening bid) when the article is put up to the auction, a selling point, a photo, a safety check information and the like. The sale receiving means 1a registers the car information, a membership number or a name of the seller, and a car management number for associating them each other to manage the car in a car information database of the information storing means 1g.

Further, input of the car information may be conducted at a management company managing the system by mailing a predetermined document to the management company.

Upon submission for sale, the auction selecting means 1c notifies the seller terminal 3 of information of auctions at which the seller's car can be auctioned and displays the information on the screen of the terminal 3, and makes the seller select an auction at which the car is to be auctioned. The result of the selection is stored in the information storing means 1g. This storing operation is made for each piece of car information. Further, if the seller knows in advance about information on an auction to be held, auction names and the like are notified to the server 1 together with the car information and are read by the auction selecting means 1c to be stored in the information storing means 1a, thus the auction information needs not be notified to sellers every time submission for sale is made.

In addition, upon registering the article information, an opening date and a closing date for showing the article to public are calculated in the sale receiving means 1a, and are registered in the information storing means 1g. The opening date may be calculated based on a registration date. Alternatively, the opening date may be determined by counting backward from the date of the auction at which the car is to be auctioned. For example, the showing period may be Monday through Friday in the previous week of the auction.

### <Application for purchase>

On the other hand, the server 1 provides retrieval service to purchasers in order to show the car to public. The retrieval service is preferably constructed such that a purchaser accesses the information showing means 1d via a purchaser terminal 4, and retrieves information in the car database of the information storing means 1g with a car name, a grade, displacement volume and the like as keywords.

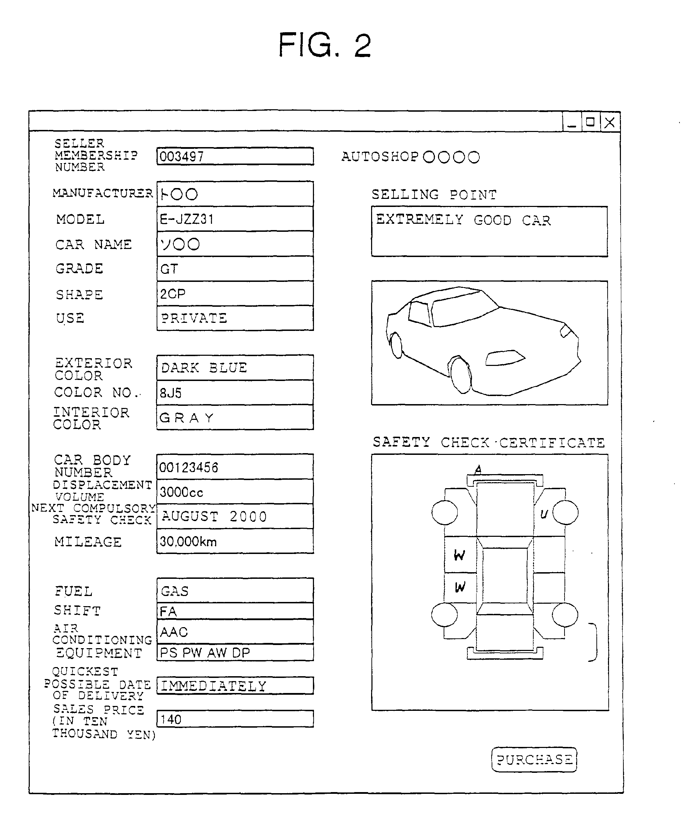

If a car is specified by retrieving means, car information of the car is transmitted to the purchaser terminal 4. Fig. 2 shows an example of the information that is then transmitted to the purchaser terminal 4, and shows a screen form written in HTML.

If purchase of a car that the purchaser has viewed is desired, the purchaser presses (clicks) a "purchase" button on the screen.

In this way, the purchaser terminal 4 notifies the server 1 of the purchase, and the purchase receiving means 1e receives the notice and requires of the purchaser information that is necessary for specifying the purchaser such as a membership number, an address, a name, and the like. Then, the purchaser terminal 4 moves the record of the car database in the information storing means 1g to a sold car database while associating the record with information of the purchaser. The purchase receiving means 1e notifies the seller terminal 3, together with the information of the purchaser, that an application for purchase has been received. Further, how to notice the seller is not limited to this, but the notice may be sent by mail, fax or the like.

### <Processing after the lapse of the showing period>

Submission for sale and application for purchase are thus received at any time. In addition, the auction instruction information outputting means 1f checks the car database everyday, and if there is a car that has reached its closing date for showing to public, the record of the car is moved to a to-be-auctioned database. Also, the auction instruction information outputting means 1f outputs instruction information for instructing the seller to put up the car to an auction by an e-mail, a facsimile or the like to the seller, and at the same time, transmits the car information to the corresponding one of the auction sites 5 such that the car is auctioned at the auction selected at the time of registration.

In this way, according to this embodiment, an article is shown to public for a predetermined period to allow purchasers to access whenever it suits them, thereby extensively inviting purchasers and, after the lapse of the predetermined period, the article is put up to an auction, so that the article can be sold fast. Therefore, circulation of cars is facilitated, and costs for storing and keeping cars can be controlled.

In addition, an article can be sold fast while obtaining an opportunity for selling on desired conditions by showing the article to public for the predetermined period with desired conditions (desired price) of the seller being presented, and exhibiting at an auction after the lapse of the period.

Further, although an auction at which the car is to be auctioned is determined when the car information is inputted, and the auction instruction information outputting means 1f instructs the seller to put up the car to the auction on the closing date for showing the car to public, the system according to the present invention is not limited to this. For example, the system may be configured, without providing the exhibition instructing information outputting means 1f, such that the seller accesses the server 1 after receiving a notice from the server 1 on the closing date for showing to public, specifies his or her car by the car management number, and selects an auction by the auction selecting means 1c.

### <Second Embodiment>

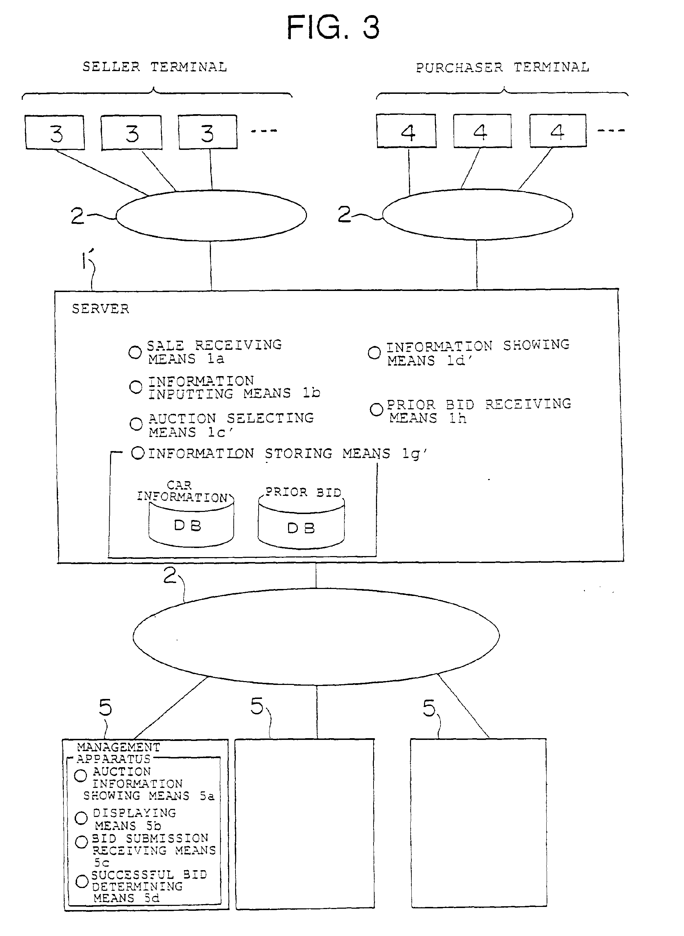

Fig. 3 is a schematic diagram illustrating a second embodiment of the present invention. In this embodiment, a system is provided in which prior bid is made, an auction is held after the lapse of a predetermined period, the price at the prior bid and the price at the auction are compared, and a higher price of the two is determined as the successful bid price. Further, elements identical with those of the first embodiment are denoted by the same reference symbols and their descriptions are omitted in this embodiment.

Reference symbol 1' is a server provided with the system, and is provided with: the sale receiving means 1a; the information inputting means 1b; and auction selecting means 1c' for making a seller to select an auction at which an article is to be auctioned and notifying an organizer of the auction that the car is to be put up to the auction. In addition, the server 1' is also provided with: information showing means 1d' that shows to public car information and that the car is to be put up to the auction; prior bid receiving means 1h for receiving a prior bid for the car shown by the information showing means 1d' ; and information storing means 1g' that stores the car information, a prior bid price and the like.

Management apparatuses (computers) for conducting an auction based on the car information notified from the auction selecting means 1c' of the server 1 are respectively provided in the auction sites 5 . Each of the management apparatuses is provided with : auction information disclosing means 5a for disclosing a date when the auction is held and the like to the server 1; displaying means 5b for displaying car information and the like; bid submission receiving means 5c for receiving bid submission; and successful bid determining means 5d for comparing the bid submission marking the highest price at the prior bid with the bid submission marking the highest price at the auction, and determining that the car is sold to a higher bid of the two.

The seller accesses the server 1' from the seller terminal 3 via the public switched telephone network 2, inputs a membership number and the like for authentication, and makes submission for sale of an article to the sale receiving means 1a. The input of the car information in this embodiment is different from the first embodiment in that a starting price at the prior bid (the lowest acceptable bid) is inputted instead of inputting a selling price, but the rest of the information to be inputted are the same.

The car information is registered in the car information database of the information storing means 1g' while associating the information with a membership number or a name of a seller.

Upon submission for sale of the article, based on the auction information from the auction information showing means 5a of each of the auction sites 5, the auction selecting means 1c causes the seller terminal to display a name, a site, a date, a number of times and the like of auctions at which the article can be auctioned, and makes the seller to select an auction at which the article should be auctioned. Then, the auction selecting means 1c notifies that the article is to be put up to the auction and transmits the car information and information on the seller to one of the auction sites 5 where the selected auction is held or a an organizer of the auction.

In addition, upon submission for sale of article, an opening date and a closing date for showing the article to public are calculated by the sale receiving means 1a, and are registered in the information storingmeans 1g'. The opening date may be calculated based on a registration date. Alternatively, the opening date may be determined by counting backward from the date of the auction at which the car is to be auctioned. For example, the showing period may be Monday through Friday in the previous week of the auction. In this embodiment, the car is shown to public from the registration date through the day before the auction.

### <Application for purchase>

On the other hand, the server 1 provides retrieval service to purchasers (prior bidders) in order to show the car to public. The retrieval service is preferably constructed such that a purchaser accesses the information showing means 1d via a purchaser terminal 4, and retrieves information in the car database of the information storing means 1g' with a car name, a grade, displacement volume and the like as keywords.

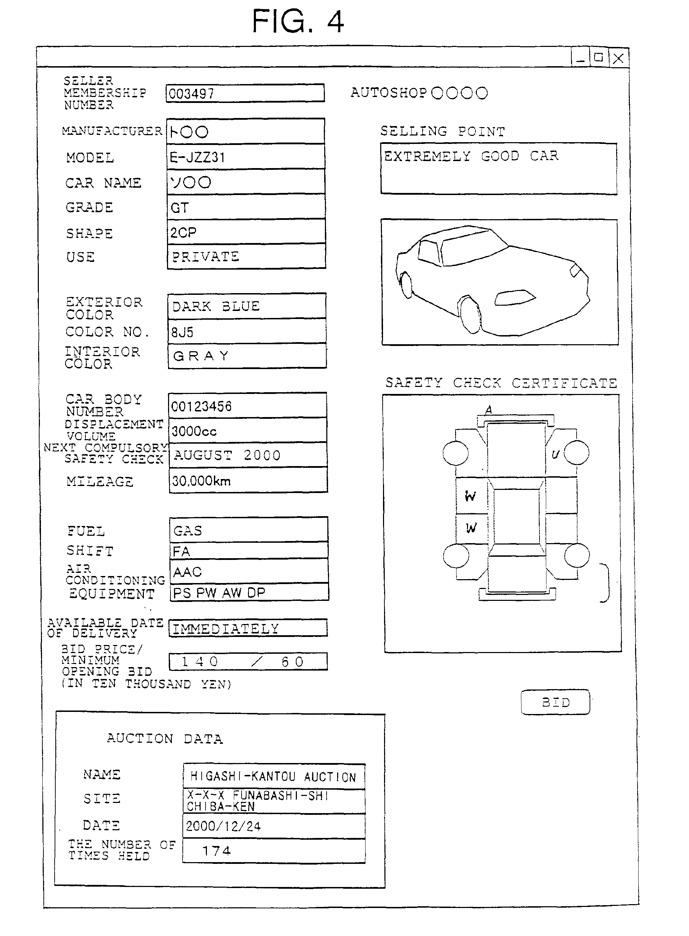

If a car is specified by retrieving means, car information of the car is transmitted to the purchaser terminal 4. Fig. 4 shows an example of the information that is then transmitted to the purchaser terminal 4, and shows a screen form written in HTML. Also shown in the screen form then is data of the auction at which the car is to be auctioned after the lapse of the period for showing the article to public.

When wishing to bid for a car that the purchaser has viewed, the purchaser fill in a membership number column and a bid price column on the screen and presses a "bid" button. In this way, the purchaser terminal 4 notifies the server 1 of the bid, the prior bid receiving means 1h receives the notice, and the prior bid data such as a car management number, a date of bid, a price of bid, and a membership number are stored in the prior bid database in the information storing means 1g'.

Then, the car database is checked everyday and, if there is a car that has reached its closing date for showing to public, showing of the car is terminated, the prior bid data presenting the highest price is specified and notified to the successful bid determining means 5d.

### <Auction>

The management apparatus in the selected one of the auction sites 5 displays the car information notified by the auction selecting means 1c' on displaying means (a site display, etc.) 5b, and an auction is conducted with the auction starting price as an initial value.

Each time the price is bid up, bid submission is received by the bid submission receiving means 5c of the management apparatus, and the highest price (auction price) is updated and displayed on the site display 5b.

Then, when the auction is completed, the successful bid determining means 5d determines the bidder presenting the higher price as a successful bidder by comparing the auction price and the prior bid price notified by the server 1. If the auction price is higher than the prior bid price, the successful bid determining means 5d determines that the successful bid is to be made in the auction site, and notifies the prior bidder that the prior bidder fails to be a successful bidder.

In addition, if the prior bid price is higher than the auction price, a successful bid price is determined by a predetermined rule. For example, the prior bid price itself may be the successful bid price, or an amount calculated by adding a unit price to the auction price may be the successful bid price by providing unit price storing means for storing a unit price of bidding up. Further, if no bid submission is received in the selected one of the auction sites 5 and there is a prior bid, the successful bid price may be determined by adding the unit price to an auction starting price by providing the unit price storing means and starting price storing means (in this example, the information storing means 1g') for storing the starting price of the auction.

The highest price of the prior bid and the successful bid price may be displayed on the site display 5b.

As described above, according to this embodiment, prior bids are invited for a predetermined period to allow purchasers to access whenever it suits them, thereby extensively inviting purchasers by conducting, and the article is put up to an auction after the lapse of the predetermined period, so that the article can be sold fast at a reasonable price.

Further, the auction in this embodiment may be any form as long as it is a real time auction in which participants can participate substantially simultaneously, or may be the one in which participants can participate from remote locations as in the auction system described in the Japanese Patent Application Laid-open No. Hei 11-328271, or the one in which auctions are conducted only online.

In addition, although the bid submission receiving means 5c and the successful bid determining means 5d are provided in each auction site in this embodiment, these means may be provided in the server 1', and configured to receive bid submission from the auction sites 5 via the communicating means 2 and notify the auction sites 5 of a successful bid result also via the communicating means 2.

Moreover, although the starting price of the auction is fixed in advance in this embodiment, the present invention is not limited to this. The highest price of the prior bid may be the starting price of the auction. In this case, the successful bid determining means simply determines that, if a bid is made in the auction site, a successful bid is made in the auction site, and if no bid is made in the auction site, the prior bidder will be a successful bidder. In this case, identical means may be used as both the prior bid receiving means and the bid submission receiving means.

In addition , although an example in which a used car is described as an article to be put up to an auction, the present invention is not limited to this. An article may be any thing that has tradability, including real estates and bonds.

In addition, the server 1 may be a Web server connected to the Internet, which shows an article information and the like on the home page on the WWW (world Wide Web) , and trades with the seller terminal 3, the purchaser terminal 4 and the auction sites 5.

Further, the present invention is not limited to the contents of the above-mentioned embodiments, but can be modified without departing form the scope and the sprit of the invention which are described in the appended claims.

## Claims

1. An online trading system comprising:
sale receiving means (1a) for receiving submission for sale of an article;
information inputting means (1b) for inputting information of the article;
information storing means (1g) for storing the information of the aricle;
auction selecting means (1c) for selecting an auction at which the article is to be auctioned;
information showing means (1d) for showing the information of the article to public via communicating means;
purchase receiving means (1e) for receiving an application for purchase of the article; and
auction instruction information outputting means (1f) for instructing a seller to put up the article to the auction selected by said auction selecting means if no purchase application is received within a predetermined period or until a predetermined date and time.

2. An online trading system comprising:
sale receiving means (1a) for receiving submission for sale of an article;
information inputting means (1b) for inputting information of the article;
information storing means (1g) for storing the information of the article;
information showing means (1d) for showing information of the article to public via communicating means;
purchase receiving means (1e) for receiving an application for purchase of the article; and
auction selecting means (1c) for selecting an auction at which the article is to be auctioned if no purchase application is received within a predetermined period or until a predetermined date and time.

3. An online trading system comprising:
sale receiving means (1a) for receiving submission for sale of an article;
information inputting means (1b) for inputting information of the article;
information storing means (1g) for storing the information of the article;
auction selecting means (1c') for selecting an auction at which the article is to be auctioned;
information showing means (1a') for showing the information of the article to public via communicating means;
prior bid receiving means (1h) for receiving a bid for the article via the communicating means;
bid submission receiving means (5c) for receiving bid submission for the article at the auction; and
successful bid determining means (5d) for determining a successful bid based on the information received by said prior bid receiving means (1h) and the information received by said bid submission receiving means (5c).

4. An online trading system according to claim 3, **characterized in that** said successful bid determining means (5d) compares the bid submission of the highest price received by said prior bid receiving means (1h) with the bid submission of the highest price received by said bid submission receiving means (5c) and determines that the article is sold at a higher price of the two submissions.

5. An online trading system according to claim 3 or 4 further **characterized by**:
unit price storing means for storing a unit price of bidding up, wherein, if the article is to be sold to a bid submission received by said prior bid receiving means (1h), said successful bid determining means (5d) determines a successful bid price by adding the unit price to the highest price of the bid submission received by said bid submission receiving means (5c).

6. An online trading system according to claims 3, 4, or 5, further **characterized by**:
unit price storing means for storing a unit price of bidding up; and
starting price storing means for storing a starting price of the auction, wherein, if there is no bid submission at the auction but a bid submission is received via the communicating means (2), said successful bid determining means (5d) determines a successful bid price by adding the unit price to the starting price.

7. An online trading system according to any one of claims 1 through 6, **characterized in that** said information showing means (1d; 1d') shows the information of the article to public for a predetermined number of days and hours before the date of the auction at which the article is to be auctioned.

8. An online trading system according to any one of claims 1 through 6, **characterized in that** said information showing means (1d, 1d') shows the information of the article to public on a predetermined day weeks before the date of the auction at which the article is to be auctioned.

9. An online trading system according to any one of claims 1 through 8, **characterized in that** the article is a used car, and the information to be shown by said information showing means (1d, 1d') includes at least one of a manufacturer, a model, a car name, a grade, a shape, a use, an exterior color, a color number, an interior color, a body number, a displacement volume, the next compulsory safety check interval, a mileage, fuel, a shift, equipment, the quickest possible delivery date, a selling point, a photo, and a safety check certificate.
